# FASCICULE DE BREVET EUROPEEN

(11) **EP 2 448 818 B1**
(45) Date de publication et mention de la délivrance du brevet: **02.09.2015**
(21) Numéro de dépôt: 10742175.2
(22) Date de dépôt: 01.07.2010
(51) Int. Cl.: B64D 27/26

(54) **SYSTÈME D'ATTACHE D'UN MOTEUR À HÉLICES**
SYSTEM ZUR ANBRINGUNG EINES PROPELLERANTRIEBS
SYSTEM FOR ATTACHING A PROPELLER DRIVE

(30) Priorité: 03.07.2009 FR 0954581
(43) Date de publication de la demande: 09.05.2012
(73) Titulaire: Airbus Operations (S.A.S.), 31060 Toulouse (FR)
(72) Inventeur: BONNET, Mathieu, F-31000 Toulouse (FR)
(74) Mandataire: Gicquel, Olivier Yves Gérard
(86) Numéro de dépôt international: PCT/FR2010/051387
(87) Numéro de publication internationale: WO 2011/001121

(56) Documents cités:
- EP-A1- 0 455 355
- EP-A1- 1 982 915
- FR-A1- 2 917 713
- US-A1- 2009 090 811
- US-B1- 6 296 203

## Description

### Domaine de l'invention

L'invention concerne un système d'attache d'un moteur à hélices sur un mât de liaison d'un aéronef, assurant l'absorption d'une partie au moins des vibrations provenant du moteur. L'invention concerne également un procédé pour mettre en oeuvre ce système d'attache.

L'invention trouve des applications dans le domaine de l'aéronautique et, en particulier, dans le domaine des liaisons entre un mât et un moteur d'aéronef.

### Etat de la technique

Dans le domaine de l'aéronautique, il existe plusieurs types de moteurs :
- les turboréacteurs généralement installés sous la voilure de l'aéronef et reliés, à cette voilure, par l'intermédiaire d'un mât-réacteur, ou mât de liaison, et
- les moteurs turbopropulsés à hélices, installés à l'arrière de l'aéronef ou sous la voilure de l'aéronef.

De nos jours, les aéronefs les plus utilisés sont des aéronefs à turboréacteur. Cependant, ils présentent l'inconvénient de nécessiter une forte consommation de carburant (kérosène). Pour cette raison, certains constructeurs aéronautiques continuent à développer des aéronefs à turbopropulseurs. En effet, les aéronefs à hélices ont l'avantage d'être sensiblement moins gourmands en kérosène que les aéronefs à turboréacteurs. Par contre, ils ont l'inconvénient de générer de nombreuses vibrations, nuisibles pour la structure de l'aéronef et relativement inconfortables pour les passagers. Les vibrations générées par le mouvement des hélices est transmis au fuselage de l'aéronef via le mât de liaison reliant le moteur au fuselage. Cette transmission des vibrations peut être atténuée par le système d'attache du moteur.

Il existe, actuellement, plusieurs types d'attache du moteur sur le fuselage de l'aéronef. Il existe, notamment, un système d'attache rigide utilisé comme jonction entre le moteur et le fuselage (ou la voilure) de l'aéronef. Ce type d'attache rigide offre une bonne transmission des efforts, du moteur vers l'aéronef, mais il n'absorbe aucune vibration. Un tel système d'attache rigide est donc particulièrement bien adapté aux aéronefs à turboréacteurs qui ne génèrent quasiment pas de vibrations. Par contre, il n'est pas adapté aux aéronefs à moteurs à hélices.

Il a été envisagé de réaliser des systèmes d'attache du moteur sur le fuselage susceptibles d'absorber des vibrations. En effet, on connait différents moyens d'absorber des vibrations. On connait, en particulier, comme système permettant l'absorption de vibrations, le résonateur dynamique qui a pour effet de produire une force antagoniste à la vibration dans le but de l'annuler. Un tel résonateur est placé, généralement, sur un noeud structural permettant de les faire vibrer. Cependant, un tel résonateur dynamique présente le défaut d'avoir une plage de fonctionnement très limitée, valable pour une fréquence donnée uniquement. Un tel système ne peut donc être d'une grande efficacité dans un système d'attache d'un moteur à hélices dans lequel sont générées des vibrations de plusieurs types, à des fréquences différentes.

On connait également, comme système permettant l'absorption de vibrations, l'amortisseur. L'utilisation d'un amortisseur ne permet pas de faire bouger les modes vibratoires, mais il permet de lisser les pics issus de ces derniers. Aussi, pour être efficace, un amortisseur a besoin d'un minimum de vitesse ; il ne peut donc amortir toutes les vibrations générées par un moteur à hélices.

On connait en outre le document US 6 296 203 B1, qui est considéré comme l'art antérieur le plus proche et décrit un système d'attache d'un élément susceptible de vibrer sur une structure d'aéronef, comportant au moins une paire de fixations, d'une part, sur l'élément susceptible de vibrer et, d'autre part, sur la structure, chaque fixation de la paire de fixations comporte:
- un élément rigide externe fixé sur la structure,
- un élément rigide interne monté à l'intérieur de l'élément rigide externe et solidaire de l'élément susceptible de vibrer, et
- un élément souple placé le long de chaque flanc de l'élément rigide externe, entre l'élément rigide externe et l'élément rigide interne.

Le système d'attache des moteurs à hélices actuellement utilisé est un système mou, réalisé dans un matériau ayant la propriété d'absorber les vibrations. Un tel système d'attache mou, appelé aussi « Soft-Mount », est réalisé généralement en élastomère. La rigidité relativement faible ainsi que l'amortissement propre à ce matériau permet une filtration de la vibration, c'est-à-dire une atténuation d'un certain nombre de vibrations.

Actuellement, les attaches utilisées pour les moteurs à hélices ne remplissent pas complètement leur rôle filtrant en basse fréquence, c'est-à-dire pour des vibrations ayant une fréquence inférieure à 20Hz. En effet, ces attaches souples, réalisées en élastomère, travaillent en compression. Leur courbe de rigidité, fonction de la force appliquée, en compression, est de type non linéaire, sensiblement hyperbolique. Ainsi, plus la charge appliquée en compression est élevée et plus la rigidité augmente. En conséquence, lorsque les efforts à transmettre à la structure sont élevés, l'élastomère devient rigide. Cette courbe de rigidité étant de forme hyperbolique, la rigidité de l'élément souple augmente bien plus rapidement que les efforts appliqués. De plus, il est difficile de déterminer précisément l'évolution de cette rigidité. En conséquence, pour une charge qui n'est pas nécessairement très élevée, le mode propre de la suspension devient trop élevé pour agir comme filtre. La suspension souple perd donc son comportement filtrant.

Autrement dit, dès que les efforts provenant du moteur dépassent les efforts standards d'un vol de croisière, l'élastomère devient relativement rigide, voir complètement rigide. Il n'offre plus alors aucune souplesse et n'absorbe plus de vibrations.

### Exposé de l'invention

L'invention a justement pour but de remédier aux inconvénients des techniques exposées précédemment. A cette fin, l'invention propose un système d'attache d'un moteur à hélices sur un mât réacteur comportant des éléments rigides et un élément souple, intercalé entre les éléments rigides, de façon à permettre à l'élément souple de travailler en cisaillement jusqu'à une butée. La courbe de rigidité de l'élastomère en cisaillement étant linéaire, le système d'attache de l'invention reste souple pour un effort moteur bien plus grand que pour le système mou de l'art antérieur. Par contre, dès que les efforts provenant du moteur sont particulièrement élevés, notamment dans les cas de vol extrême, l'élément souple entre en butée de sorte que le système d'attache ne filtre plus les vibrations mais transmet la totalité des efforts.

De façon plus précise, l'invention concerne un système d'attache d'un élément susceptible de vibrer sur une structure d'aéronef, comportant au moins une paire de pelles fixée, d'une part, sur l'élément susceptible de vibrer et, d'autre part, sur la structure,
caractérisé en ce que chaque pelle de la paire de pelles comporte :
- un élément rigide externe fixé sur la structure,
- un élément rigide interne monté à l'intérieur de l'élément rigide externe et solidaire de l'élément susceptible de vibrer, et
- un élément souple placé le long de chaque flanc de l'élément rigide externe, entre l'élément rigide externe et l'élément rigide interne.

Le système d'attache de l'invention peut comporter une ou plusieurs des caractéristiques suivantes :
- l'élément souple est une plaque d'un matériau à base d'élastomère.
- l'élément souple est apte à travailler en cisaillement.
- il comporte un premier jeu situé entre l'élément rigide externe et l'élément susceptible de vibrer.
- il comporte un second jeu situé entre l'élément rigide interne et l'élément rigide externe.
- il comporte une entretoise placée entre l'élément rigide interne et l'élément rigide externe.
- l'élément susceptible de vibrer est un moteur à hélices et la structure est un mât réacteur.

L'invention concerne également un procédé pour mettre en oeuvre le système d'attache décrit précédemment. Ce procédé se caractérise par le fait qu'il comporte :
- un fonctionnement souple dans lequel le système est apte à absorber des vibrations provenant de l'élément susceptible de vibrer, lorsque les charges générées par cet élément sont normales, et
- un fonctionnement dur dans lequel le système est apte à se mettre en butée lorsque lesdites charges sont extrêmes.

Le procédé selon l'invention peut comporter la caractéristique suivante :
- lorsque le système a un fonctionnement dur, au moins un des premier et second jeux est comblé.

L'invention concerne également un aéronef équipé d'un moteur à hélices relié à un mât-réacteur par l'intermédiaire d'un système d'attache tel que décrit précédemment.

### Brève description des dessins

La figure 1 représente une vue générale d'une structure d'aéronef sur laquelle est fixé le système d'attache de l'invention.
La figure 2 représente une vue de coté d'un système d'attache de l'invention.
La figure 3 représente une vue de profil des pelles supérieures du système de l'invention.
La figure 4 représente une vue de profil en coupe d'une double pelle du système de l'invention.
La figure 5 représente une vue de coté en coupe d'une pelle supérieure du système de l'invention.
La figure 6 représente une jonction piano dans laquelle le système de l'invention peut être implanté.

### Description détaillée de modes de réalisation de l'invention

L'invention concerne un système d'attache d'un élément susceptible de vibrer sur une structure d'aéronef. Elle concerne en particulier un système d'attache d'un moteur à hélices sur un mât-réacteur d'aéronef.

Dans tout aéronef, lé moteur est fixé sur un mât-réacteur lui-même fixé sur la structure de l'aéronef. Lorsqu'il est à hélices, le moteur peut être fixé soit sous la voilure de l'aéronef, latéralement de part et d'autre du fuselage, soit à l'arrière de l'aéronef. Dans le mode de réalisation de l'invention décrit par la suite, on considérera le cas où le moteur à hélices est fixé sur un mât-réacteur lui-même fixé sur le coté du fuselage arrière de l'aéronef.

Le moteur est fixé sur le mât réacteur par l'intermédiaire d'au moins un système d'attache conforme à l'invention. Ce système d'attache est un système dit à pelles. Il comporte au moins deux pelles placées en regard l'une de l'autre, de part et d'autre du mât-réacteur ou, plus précisément, de la structure primaire du mât-réacteur.

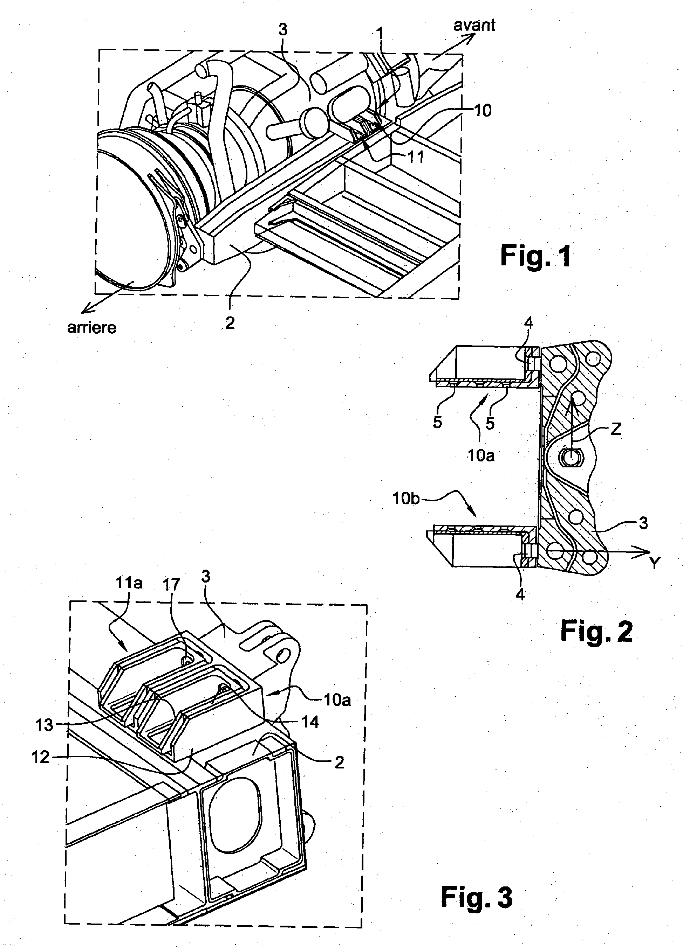

Sur la figure 1, on a représenté un exemple d'une liaison entre un moteur et un mât réacteur, comprenant le système d'attache de l'invention. Le système d'attache 1 de l'invention est fixé sur le moteur 3, d'une part, et sur la structure du mât réacteur 2, d'autre part. La structure du mât-réacteur 2 est placée dans l'espace situé entre deux paires de pelles 10 et 11.

Dans l'exemple de la figure 1, le système d'attache 1 de l'invention est monté à l'avant du moteur car la température, à l'avant du moteur, est moins élevée qu'à l'arrière. Il est toutefois envisageable de monter ce système d'attache à l'arrière du moteur.

Dans le mode de réalisation préféré de l'invention, représenté sur la figure 1, le système d'attache est implanté dans un environnement moteur où il joue le rôle d'attache-moteur. Il peut toutefois être installé sur de nombreuses jonctions de la structure de l'aéronef, par exemple sur une jonction fuselage, ce système d'attache jouant un rôle de liaison structurale souple.

Un exemple d'une paire de pelles du système d'attache de l'invention est représenté sur la figure 2. En effet, le système d'attache 1 de l'invention peut comporter une ou plusieurs paires de pelles 10. Dans le mode de réalisation préféré de l'invention, les paires de pelles sont doubles, comme montré sur la figure 1. Toutefois, comme montré sur la figure 2, le système d'attache peut comporter une seule paire de pelles 10.

Cette figure 2 montre la paire de pelles 10, selon une vue de coté, avant montage du mât réacteur. Cette paire de pelles 10 comporte une pelle supérieure 10a et une pelle inférieure 10b, en regard l'une de l'autre. Chaque pelle 10a, 10b est fixée sur le moteur 3 par un premier moyen de fixation 4 et sur le mât réacteur (non visible sur cette figure 2) par des seconds moyens de fixation 5.

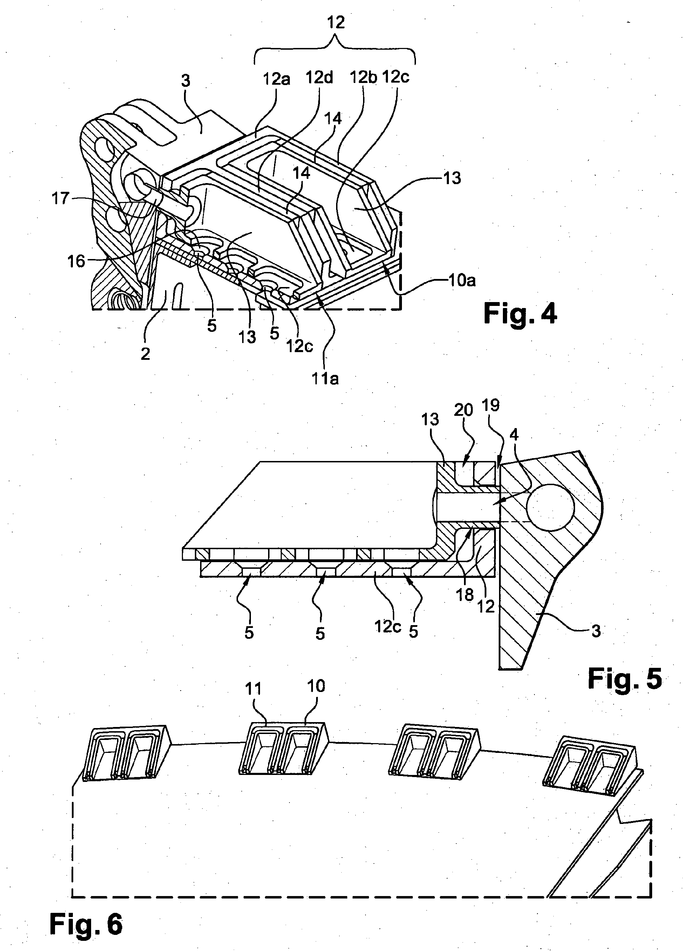

Sur les figures 3 et 4, on a représenté une vue de profil de la partie supérieure du système d'attache 1. Ces deux figures 3 et 4 montrent la partie supérieure du système d'attache, dans le cas où il comporte une double paire de pelles. Il est à noter que les pelles inférieures 10b sont identiques aux pelles supérieures 10a, 11 a, excepté qu'elles sont positionnées en sens inverse (les planchers 12c des pelles inférieures et supérieures sont face à face) pour permettre leur fixation sur le mât.

Qu'elle soit supérieure ou inférieure, chaque pelle comporte un élément rigide externe 12, un élément rigide interne 13 et deux éléments souples 14. Dans le cas d'une double pelle, la paroi centrale 12d de l'élément rigide externe est commune aux deux pelles 10a, 11 a.

L'élément rigide externe 12 a une forme sensiblement en U comprenant deux parois latérales verticales 12b, un plancher 12c et une paroi verticale arrière 12a. Les parois latérales 12b, 12d ont leur face avant sensiblement en biais. L'élément rigide externe 12 est fixé sur le caisson du mât 2, par l'intermédiaire de seconds moyens de fixations 5 traversant des orifices 16 réalisés dans le plancher 12c dudit élément rigide externe. Ces seconds moyens de fixation 5 sont des pièces de fixation de cisaillement.

L'élément rigide interne 13 a une forme sensiblement identique à celle de l'élément rigide externe 12, avec un plancher comportant des orifices d'un diamètre supérieur à celui des orifices 16 de l'élément rigide externe 12. L'élément rigide interne 13 est adapté pour être monté au sein de l'élément rigide externe 12. L'élément rigide interne 13 est fixé sur le moteur 3 par l'intermédiaire d'un premier moyen de fixation 4, non visible sur les figures 3 et 4. Ce premier moyen de fixation peut être, par exemple, un boulon de traction 4 inséré, comme montré sur la figure 5, à l'intérieur d'un orifice 17 traversant l'élément rigide externe et l'élément rigide interne. Ce premier moyen de fixation solidarise l'élément rigide interne avec le moteur 3.

Un élément souple 14 de forme rectangulaire est placé le long de chaque paroi latérale verticale 12b, appelée aussi flanc, de l'élément rigide externe, entre l'élément rigide externe et l'élément rigide interne. Ainsi, chaque pelle 10a, 11a comporte deux éléments souples 14 fixés verticalement entre les flancs des éléments rigides internes et des éléments rigides externes. Ces éléments souples 14 sont des plaques d'un matériau souple, aptes à subir un déplacement en cisaillement par rapport aux flancs de l'élément rigide externe.

Sur la figure 5, on a représenté une vue en coupe d'une pelle du système d'attache de l'invention. Cette vue en coupe montre l'élément rigide externe 12 avec ses fixations de cisaillement 5 ainsi que le boulon de traction 4 traversant l'élément rigide externe 12 et l'élément interne 13 par l'orifice 17 et fixant le système d'attache 1 au moteur 3. Elle montre également une entretoise 18 placée entre l'élément rigide interne et la paroi arrière 12a de l'élément rigide externe et dont le rôle est d'éviter que la précontrainte de serrage du boulon de traction ne vienne mettre en contact les éléments rigides interne et externe. Cette figure 5 montre, en outre, un premier jeu 19 situé entre l'élément rigide externe 12 et le moteur 3, et un second jeu 20 situé entre l'élément rigide interne 13 et l'élément rigide externe 12. Dans un mode de réalisation de l'invention, le premier jeu 19 a une dimension de l'ordre de 4mm et le second jeu 20 a une dimension de l'ordre de 14mm. Ces deux jeux forment ensemble la course de l'élément rigide interne, dans son fonctionnement souple. Les jeux sont choisis non symétriques car les charges, c'est-à-dire les efforts de transmission, ne sont pas symétriques.

Comme expliqué précédemment, chaque pelle ou double pelle du système d'attache de l'invention est fixée sur le moteur par l'intermédiaire d'un boulon de traction et sur le caisson du mât-réacteur par l'intermédiaire de fixations de cisaillement. L'élément rigide interne est donc relié directement au moteur et l'élément rigide externe est relié directement au mât réacteur. On comprend ainsi que la transmission des efforts entre le moteur et le mât réacteur se fait par l'intermédiaire des éléments rigides reliés l'un à l'autre par l'élément souple. Plus précisément, les efforts provenant du moteur sont transmis par le boulon de traction à la pelle. Le boulon de traction charge l'élément rigide interne de la pelle, c'est-à-dire qu'il lui transmet ses efforts ; ces efforts sont ensuite transmis à l'élément rigide externe par l'intermédiaire de l'élément souple, qui travaille en cisaillement. Enfin, l'élément rigide externe transmet les efforts vers le mât réacteur par l'intermédiaire des fixations de cisaillement.

Dans un tel fonctionnement, les vibrations ont pour effet de provoquer une légère oscillation des efforts perçus par l'élément rigide interne. Les jeux 19 et 20 présents entre l'élément rigide interne et l'élément rigide externe, au niveau de la base et au niveau de l'alésage par lequel passe entretoise, permettent de laisser vivre l'élément rigide interne par rapport à l'élément rigide externe. Ces jeux associés aux éléments souples permettent d'absorber les vibrations.

Dans le fonctionnement tel qu'il vient d'être décrit, appelé fonctionnement souple, le système d'attache assure une reprise du couple d'effort transmis par le moteur à hélices : la reprise des efforts est réalisée suivant les directions Y et Z, montrées sur la figure 2, et avec une torsion Mx autour de l'axe X.

Dans le mode de réalisation préféré de l'invention, les éléments rigides sont réalisés dans un matériau métallique et les éléments souples dans un matériau à base d'élastomère. Selon l'invention, l'élastomère est travaillé en cisaillement ; en effet, l'élastomère a une courbe de rigidité en cisaillement qui est linéaire. Ainsi, l'élongation de l'élément souple est proportionnelle à l'effort subit. Cette linéarité de la courbe de rigidité de l'élastomère en cisaillement permet une meilleure compréhension des phénomènes ; elle permet aussi un contrôle optimal de la rigidité de l'élastomère en fonction de ses caractéristiques géométriques.

La linéarité de la courbe de rigidité de l'élastomère permet en outre de déterminer un cisaillement buté, c'est-à-dire un cisaillement à partir duquel l'élastomère n'est plus capable d'absorber les efforts reçus. En effet, on comprend aisément que pour permettre un transfert d'effort de charge très élevée, en cisaillement, il faudrait un couple épaisseur/surface très important, ce qui nécessiterait un certain encombrement.

Aussi, dans l'invention, on propose d'amortir les vibrations ayant une fréquence contenue dans une certaine plage de fréquences. Le système d'attache de l'invention est donc conçu pour permettre l'amortissement de vibrations ayant une fréquence inférieure à une valeur prédéfinie, de l'ordre de 10 à 20 Hz. Cette plage d'utilisation est choisie de façon à couvrir l'ensemble des charges en vol courant, c'est-à-dire dans les phases de vol normal. Pour des charges extrêmes, c'est-à-dire dans les cas de vol extrême (comme les cas de fortes rafales, etc.), le système entre en butée métal contre métal ; on appelle butée de la pelle, le positionnement de l'élément rigide interne contre l'élément rigide externe.

En butée, l'élément souple n'a plus aucun rôle d'absorbeur de vibrations. Le système d'attache de l'invention peut alors fonctionner selon un fonctionnement dur. Dans ce fonctionnement dur, au moins un des deux jeux 19 et 20 sont comblés. L'élément rigide interne est directement en contact contre l'élément rigide externe. Les efforts provenant du moteur sont donc véhiculés directement par contact du moteur sur l'élément rigide externe. Ils viennent ensuite se décharger directement dans le mât par l'intermédiaire des fixations de cisaillement.

Le système d'attache de l'invention vient d'être décrit dans le cas où il assure la liaison d'un moteur sur un mât-réacteur. Un tel système d'attache à pelles souples peut également être implanté à la jonction entre le mât-réacteur et le fuselage. En effet, actuellement sur les aéronefs, la jonction entre le mât réacteur et le fuselage est réalisée au moyen de jonctions-piano, c'est-à-dire de plusieurs jonctions consécutives, comme montré sur la figure 6. Ces jonctions-piano peuvent être réalisées par les pelles souples de l'invention, telles que décrites précédemment, ces jonctions piano permettant alors l'absorption de vibrations entre le mât réacteur et le fuselage de l'aéronef.

## Revendications

1. Système d'attache d'un élément susceptible de vibrer (3) sur une structure (2) d'aéronef, comportant au moins une paire de pelles (10) apte à être fixée, d'une part, sur l'élément susceptible de vibrer et, d'autre part, sur la structure, et dont
chaque pelle (10a, 10b) de la paire de pelles comporte :
- un élément rigide externe (12) apte à être fixé sur la structure,
- un élément rigide interne (13) monté à l'intérieur de l'élément rigide externe et apte à être solidaire de l'élément susceptible de vibrer, et
- un élément souple (14) placé le long de chaque flanc de l'élément rigide externe, entre l'élément rigide externe et l'élément rigide interne.

2. Système d'attache selon la revendication 1, **caractérisé en ce que** l'élément souple est une plaque d'un matériau à base d'élastomère.

3. Système d'attache selon l'une quelconque des revendications 1 à 2, **caractérisé en ce que** l'élément souple est apte à travailler en cisaillement.

4. Système d'attache selon l'une quelconque des revendications 1 à 3, **caractérisé en ce qu'**il comporte un premier jeu (19) situé entre l'élément rigide externe (12) et l'élément susceptible de vibrer (3).

5. Système d'attache selon la revendication 4, **caractérisé en ce qu'**il comporte un second jeu (20) situé entre l'élément rigide interne (13) et l'élément rigide externe (12).

6. Système d'attache selon l'une quelconque des revendications 1 à 5, **caractérisé en ce que** qu'il comporte une entretoise (18) placée entre l'élément rigide interne et l'élément rigide externe.

7. Système d'attache selon l'une quelconque des revendications 1 à 6, **caractérisé en ce que** l'élément susceptible de vibrer est un moteur à hélices et la structure est un mât réacteur.

8. Procédé de mise en oeuvre du système selon l'une quelconque des revendications 1 à 7, **caractérisé en ce qu'**il comporte :
- un fonctionnement souple dans lequel le système est apte à absorber des vibrations provenant de l'élément susceptible de vibrer (3), lorsque les charges générées par cet élément (3) sont normales, et
- un fonctionnement dur dans lequel le système est apte à se mettre en butée lorsque lesdites charges sont extrêmes.

9. Procédé selon la revendication 8, **caractérisé en ce que**, lorsque le système a un fonctionnement dur, au moins un des premier et second jeux est comblé.

10. Aéronef **caractérisé en ce qu'**il comporte au moins un système d'attache selon l'une quelconque des revendications 1 à 7.

## Patentansprüche

1. System zur Anbringung eines schwingfähigen Elements (3) an einer Struktur (2) eines Luftfahrzeugs, welches wenigstens ein Paar Schaufeln (10) aufweist, das geeignet ist, einerseits an dem schwingfähigen Element und andererseits an der Struktur befestigt zu werden, und bei dem jede Schaufel (10a, 10b) des Paares von Schaufeln aufweist:
- ein äußeres starres Element (12), das geeignet ist, an der Struktur befestigt zu werden,
- ein inneres starres Element (13), das im Inneren des äußeren starren Elements angebracht ist und geeignet ist, mit dem schwingfähigen Element fest verbunden zu sein, und
- ein flexibles Element (14), das entlang jeder Flanke des äußeren starren Elements zwischen dem äußeren starren Element und dem inneren starren Element angeordnet ist.

2. System zur Anbringung nach Anspruch 1, **dadurch gekennzeichnet, dass** das flexible Element eine Platte aus einem Material auf Elastomerbasis ist.

3. System zur Anbringung nach einem der Ansprüche 1 bis 2, **dadurch gekennzeichnet, dass** das flexible Element geeignet ist, auf Scherung beansprucht zu werden.

4. System zur Anbringung nach einem der Ansprüche 1 bis 3, **dadurch gekennzeichnet, dass** es ein erstes Spiel (19) aufweist, das sich zwischen dem äußeren starren Element (12) und dem schwingfähigen Element (3) befindet.

5. System zur Anbringung nach Anspruch 4, **dadurch gekennzeichnet, dass** es ein zweites Spiel (20) aufweist, das sich zwischen dem inneren starren Element (13) und dem äußeren starren Element (12) befindet.

6. System zur Anbringung nach einem der Ansprüche 1 bis 5, **dadurch gekennzeichnet, dass** es ein Distanzstück (18) aufweist, das zwischen dem inneren starren Element und dem äußeren starren Element angeordnet ist.

7. System zur Anbringung nach einem der Ansprüche 1 bis 6, **dadurch gekennzeichnet, dass** das schwingfähige Element ein Propellermotor ist und die Struktur ein Triebwerkspylon ist.

8. Verfahren zur Anwendung des Systems nach einem der Ansprüche 1 bis 7, **dadurch gekennzeichnet, dass** es aufweist:
- eine flexible Funktionsweise, in welcher das System in der Lage ist, Schwingungen zu absorbieren, die von dem schwingfähigen Element (3) stammen, wenn die durch dieses Element (3) erzeugten Belastungen normal sind, und
- eine harte Funktionsweise, in welcher das System in der Lage ist, in Anschlag zu kommen, wenn diese Belastungen extrem sind.

9. Verfahren nach Anspruch 8, **dadurch gekennzeichnet, dass**, wenn das System gemäß der harten Funktionsweise arbeitet, das erste und/oder das zweite Spiel geschlossen sind.

10. Luftfahrzeug, **dadurch gekennzeichnet, dass** es wenigstens ein System zur Anbringung nach einem der Ansprüche 1 bis 7 aufweist.

## Claims

1. System for attaching an element (3) capable of vibrating on an aircraft structure (2), comprising at least one pair of scoops (10) able to be fixed, on the one hand, to the element capable of vibrating and, on the other hand, to the structure, and of which each scoop (10a, 10b) of the pair of scoops comprises:
- an external rigid element (12) able to be fixed to the structure,
- an internal rigid element (13) mounted inside the external rigid element and able to be secured to the element capable of vibrating, and
- a flexible element (14) placed along each flank of the external rigid element, between the external rigid element and the internal rigid element.

2. Attachment system according to Claim 1, **characterized in that** the flexible element is a plate made of an elastomer-based material.

3. Attachment system according to either one of Claims 1 and 2, **characterized in that** the flexible element is able to work in shear.

4. Attachment system according to any one of Claims 1 to 3, **characterized in that** it comprises a first clearance (19) situated between the external rigid element (12) and the element (3) capable of vibrating.

5. Attachment system according to Claim 4, **characterized in that** it comprises a second clearance (20) situated between the internal rigid element (13) and the external rigid element (12).

6. Attachment system according to any one of Claims 1 to 5, **characterized in that** it comprises a spacer (18) placed between the internal rigid element and the external rigid element.

7. Attachment system according to any one of Claims 1 to 6, **characterized in that** the element capable of vibrating is a propeller engine and the structure is an engine pylon.

8. Method of implementing the system according to any one of Claims 1 to 7, **characterized in that** it comprises:
- a flexible operation in which the system is able to absorb vibrations coming from the element (3) capable of vibrating when the loads generated by this element (3) are normal, and
- a hard operation in which the system is able to be placed in a state of abutment when the said loads are extreme.

9. Method according to Claim 8, **characterized in that**, when the system has a hard operation, at least one of the first and second clearances is filled.

10. Aircraft, **characterized in that** it comprises at least one attachment system according to any one of Claims 1 to 7.
